# EUROPEAN PATENT APPLICATION

(11) **EP 3 992 891 A1**
(43) Date of publication of application: **04.05.2022**
(21) Application number: 21180990.0
(22) Date of filing: 22.06.2021
(51) Int. Cl.: G06Q 30/02

(54) **PLATFORM-BASED PRICING STRATEGY SERVICE**

(30) Priority: 30.10.2020 US 202017084790
(71) Applicant: NCR Corporation, Atlanta, GA 30308-1007 (US)
(72) Inventor: LASERSON, Itamar David, 5405602 Givat Shmuel (IL); SHAHARUR, Moshe, 6918503 Tel Aviv (IL); OHAYON, Julie Dvora Katz, 60970 Ashdod (IL); CHUDIN, Rotem, 4465138 Kfar-Saba (IL)
(74) Representative: Secerna LLP

(57) **Abstract**

Actual item prices and actual baskets of item prices are aggregated for a configured region across multiple retailers within the region based on transaction data for the multiple retailers. The prices are analyzed for benchmarks, trends, and abnormalities in view of item and basket prices for a requesting retailer and in view of the requesting retailer's defined pricing goal. The benchmarks and trends are delivered to the requesting retailer via a pull technique and any abnormal pricing is provided to the requesting retailer via a push technique.

## Description

Effective pricing strategy is essential for retailers to meet their profit goals. Retailers commonly turn to price benchmarking to apply competitor-based pricing strategy. But this is a hard task since catalogs may in many instances contain millions of items with constantly changing prices.

Certain retailers may wish to locate themselves as "higher end" retailers, with higher prices, while other will want to have a "best price guarantee" policy. These positionings are retailers' strategic decision which could change over time as retailer's strategy develops. But price benchmarking is a hard task.

First, many stores (online or brick & mortar), update their prices frequently, depending on market factors and availability, making price benchmarking an ongoing task. Second, price benchmarking requires retailers to gather data from dozens of stores in the area containing, hundreds of thousands of items.

Using online comparison apps and services are often not enough for brick & mortar retailers as online prices are often different than what is provided in the physical stores, and often do not reflect promotions, discounts or member-only prices. The outcome of those constraints is that retailers often settle for manual benchmarking based on limited catalogs of only the most popular items done on relatively large time intervals. Therefore, retailers will often suffer from less effective and less up-to-date price benchmarking costing them millions of dollars in lost sales.

For most online, or even brick & mortar retail businesses, pricing benchmarks are done manually, (therefore labor-intensive) and are not very accurate.

Automatic solutions such as web-scraping rely on "scraping" price data from other retailers' e- commerce sites. These solutions are technologically complex and may be insufficient for brick & mortar stores since the physical store prices are often different than the published online prices.

In various embodiments, methods and a system for a platform-based pricing strategy service is presented.

According to a first aspect of the present invention there is provided a method, comprising obtaining a pricing strategy provided by a retailer; identifying a region associated with the pricing strategy; acquiring an item identifier for an item or a set of item identifiers for a collection of items associated with a basket of items; collecting pricing data for the item or the basket of items for the retailer and for other retailers within the region; evaluating the pricing data in view of retailer-identified pricing data for the item or the basket of items within the region and in view of the pricing strategy; and providing pricing analysis data produced by the evaluating to an interface of a device operated by the retailer.

Aptly, obtaining further includes obtaining the price strategy as a quantified percentage above, below, or at an average pricing strategy calculated for the other retailers.

Aptly, acquiring further includes automatically identifying the basket.

Aptly, acquiring further includes automatically associating other item identifiers for other items that are similar to the item.

Aptly, collecting further includes obtaining a first portion of the pricing data from actual transactions that included the item or the basket from transaction data associated with the retailer and the other retailers.

Aptly, collecting further includes obtaining a second portion of the pricing data from published pricing data for the item or the basket provided by the retailer and the other retailers.

Aptly, evaluating further includes calculating a mean or an average price from the pricing data associated with the other retailers and calculate deviations from the mean or the average price for the retailer-identified pricing data for the item or the basket as identified in transaction data associated with the retailer and the other retailers.

Aptly, calculating further includes plotting the pricing data associated with the other retailers on a graph, plotting the mean or the average price on the graph, plotting the retailer-identified processing data on the graph.

Aptly, plotting further includes linking the pricing strategy, the pricing data associated with the other retailers, the mean or the average, the retailer-identified pricing data, and the item identifier for the item or the set of item identifiers for the basket to graph data associated with the graph.

Aptly, linking further includes generating a graphical interactive object from the graph data.

Aptly, providing further includes providing the graphical interactive object to the interface as the pricing analysis data.

Aptly, providing further includes pushing the pricing analysis data to the interface without a request from the retailer when the retailer-identified pricing data violates the pricing strategy.

According to a second aspect of the present invention there is provided a method, comprising providing an interface to a device operated by a retailer; receiving a pricing strategy through the interface from the retailer; obtaining transaction data for the retailer and other retailers within a region; extracting first pricing data for an item or a basket of items from the transaction data associated with the other retailers; extracting second pricing data for the item or the basket of items from the transaction data associated with the retailer; evaluating the first pricing data and the second pricing data based on the pricing strategy; producing pricing analysis data for the item or the basket based on the evaluating; and providing the pricing analysis data to the retailer through the interface.

Aptly, receiving further includes obtaining further includes receiving a region identifier for the region from the retailer through the interface.

Aptly, receiving further includes receiving an item identifier associated with the item or a basket identifier associated with the basket of items from the retailer through the interface.

Aptly, extracting the first pricing data further includes automatically generating the basket of items and receiving a selection for a basket identifier associated with the basket of items from the retailer through the interface.

Aptly, providing further includes providing the pricing analysis data through the interface as an interactive graphical object for a pricing trend associated with the item or the basket of items or for a pricing benchmark associated with the item or the basket of items.

Aptly, the method further comprises dynamically pushing an alert to a retailer service associated with the retailer or to the interface when a detected price associated with the item or the basket of items for a given transaction or set of transactions violates the pricing strategy or deviates from a mean price for the item or the basket of items associated with other transactions of the other retailers.

According to a third aspect of the present invention there is provided a system, comprising at least one processing device having at least one processor configured to execute instructions from a non-transitory computer-readable storage medium; the instructions when executed by the at least one processor from the non-transitory computer-readable storage medium cause the at least processor to perform operations comprising providing an interface to a device operated by a retailer; obtaining a pricing strategy from the retailer through the interface; identifying a region and an item identifier for an item or a basket identifier for a collection of items; obtaining transaction data for the retailer and for other retailers associated with the region; extracting prices charged for the item or the collection of items associated with the basket from the transaction data; comparing retailer-identified prices for the retailer against other retailer-identified prices for the other retailers in view of the pricing strategy; producing pricing comparison data between the retailer-identified prices and the other retailer-identified prices in view of the pricing strategy; and providing the pricing comparison data as an interactive graphical object for interaction by the retailers through the interface.

Aptly, the instructions are provided as a cloud-based price strategy service to the retailer through the interface.

According to an aspect, a method for a platform-based pricing strategy service is presented. For example, a pricing strategy provided by a retailer is obtained and a region associated with the pricing strategy is identified. An item identifier for an item or a set of item identifiers for a collection of items associated with a basket of items is acquired. Pricing data is collected for the item or the basket of items for the retailer and for other retailers within the region. The pricing data is evaluated in view of retailer-identified pricing data for the item or the basket of items within the region and in view of the pricing strategy. Pricing analysis data that is produced through the evaluation of the pricing data is provided to an interface to a device operated by the retailer.

Embodiments of the present invention will now be described hereinafter, by way of example only, with reference to the accompanying drawings in which:
FIG. 1A is a diagram of a system for a platform-based pricing strategy service, according to an example embodiment.
FIG. 1B is a diagram representing a process flow of the system of FIG. 1A, according to an example embodiment.
FIG. 2 is a diagram of a method for a platform-based pricing strategy service, according to an example embodiment.
FIG. 3 is a diagram of another method for a platform-based pricing strategy service, according to an example embodiment.

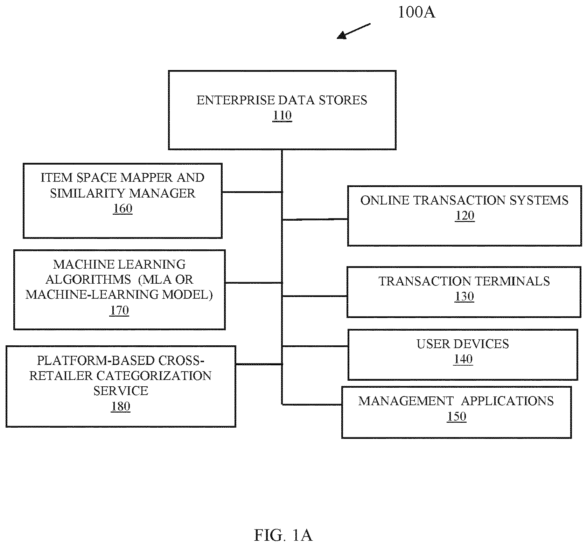

FIG. 1A is a diagram of a system 100 for a platform-based pricing strategy service, according to an example embodiment. It is to be noted that the components are shown schematically in greatly simplified form, with only those components relevant to understanding of the embodiments being illustrated.

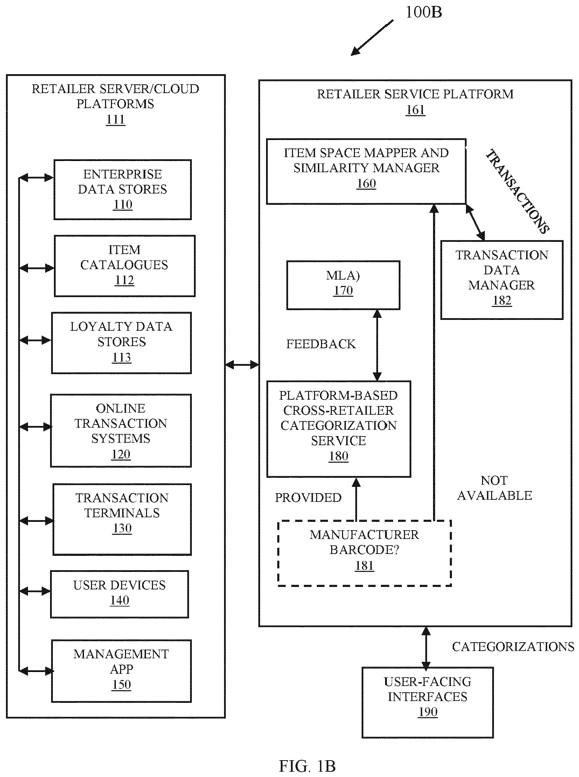

Furthermore, the various components (that are identified in the FIGS. 1A and 1B) are illustrated and the arrangement of the components is presented for purposes of illustration only. It is to be noted that other arrangements with more or less components are possible without departing from the teachings of real-time alerts of a platform-based pricing strategy service presented herein and below.

The system 100A provides a mechanism by which price benchmarking and pricing trend services are provided to retail customers. The price information for items includes both published catalogue prices and actual item prices charged during transaction by retailers (including any pricing discounts that were used). The price benchmarks and trends can be provided based on custom-defined regions and further based on user-defined and/or automatically driven basket aggregations for multiple items. The pricing benchmarks and trends are provided as a cloud-based service to the retailers through an interactive graphical user interface (GUI) along with suggested changes in item/basket pricing, suggested changes in existing item/basket promotions, and/or suggested elimination of existing item/basket promotions identified as ineffective. The cloud-based service provides real-time pricing benchmarks, trends, and suggested changes to the retailers, which is based on actual transaction data and not exclusively based on the retailer's published item pricing.

System 100A comprises an enterprise data store 110, online transaction systems 120 that span multiple different retailers, in-store transaction terminals 130 associated with multiple different retailers, user devices 140 operated by multiple different customers and/or employees of multiple different retailers, management applications (apps) 150 associated with multiple different retailers, an item space mapper and similarity manager 160, one or more machine-learning algorithms (MLA) 170, and a custom price strategy service 180. System 100A comprises a variety of computing devices, each of which comprises at least one processor and a non-transitory computer-readable storage medium comprising executable instructions. The executable instructions when executed by the corresponding processor from the corresponding non-transitory computer-readable storage medium causes that processor to perform operations discussed herein and below with respect to the components 110-180.

An "item code" represents an item from a given retailer's product catalogue. Each item code's affinity/similarity to the other item codes defines that item's vector in multidimensional space. The affinity/similarity and item code vector determined by Word2Vec algorithms based on analysis of the retailer's transaction histories and product catalogue. An "item vector" is a mathematical expression showing points within the multidimensional space representing the contexts of a given item.

As used herein, a "region" is a configurable constraint defined by a retailer. Accordingly, "region" is intended to include more than just a geographic region, such that it may also include any custom-classification desired by a retailer and can be associated with other constraints, such as age, income, gender, income level, nationality, *etc.*

Each enterprise data store 110 includes a variety of enterprise data, such as transaction histories for transactions performed with a retailer. Other types of data may be included in enterprise data store 100 as well, such as incentives available to consumers, item prices for the transaction, customer data for known customers (loyalty data, profile data, *etc*.), the transaction details for transactions of customers (including item codes for items), item or product catalogue data, and other information captured and retained by the enterprise for the store and other stores associated with the enterprise (retailer).

Each online transaction system 120 comprises interfaces and corresponding software by which customers perform online transactions with a retailer, such as via browsing items, storing selected items in a virtual cart, and checking out (paying for) items in the virtual cart. The online transaction system 120 can be web-based and/or mobile app-based. Virtual cart data provided in real time from online transaction system 120 to enterprise data store 110 or provided via an Application Programming Interface (API) in real time to price alert manager 190 during an online shopping session.

Transaction terminals 130 comprise peripheral devices (scanners, printers, media acceptors/dispensers, weigh scales, Personal Identification Number (PIN) pads, card readers, etc.) and corresponding software for performing customer checkouts associated with transactions. Real-time item and transaction data provided by terminals to their corresponding enterprise data store 110.

User devices 140 comprise peripherals (touchscreens, cameras, etc.) and corresponding software for performing customer transactions using a web browser or a mobile application (app). Real time transaction data provided by any app to a corresponding retailer's enterprise data store 110.

Management applications 150 comprises retailer-specific interfaces and features/functions that permit employees of a corresponding retailer to monitor and adjust item pricing, product catalogues, monitor retailer assets, and manage retailer assets.

Item space mapper and similarity manager 160 initially generates vectors for item codes in a product catalogue (obtained from a corresponding enterprise data store 110) using transaction histories (again, obtained from the corresponding enterprise data store 110). In this manner, the item codes in the product catalogue are assigned vectors that map to multidimensional space. Each vector linked to the item codes of the corresponding product catalogue. "Item embedding" is applied using a "Word2Vec" algorithm. Word2Vec is a group of algorithms used primarily in the field of Natural Language Processing (NLP) for machine translation. The Word2Vec takes as its input a large corpus of text (product catalogue of item codes and transaction histories from enterprise data store 110) and produces a vector space of typically several hundred dimensions (multidimensional space), each unique word (item code) in the corpus being assigned a corresponding unique vector plotted in the multidimensional space. In this way, item codes that share common contexts within the transaction histories are plotted in close proximity to one another within the multidimensional space. The transaction histories are provided as sentences to the Word2Vec algorithm and the words are the item codes (all words available are identified from the product catalogue). Mathematical calculations can be applied on the vectoral numeric representations (vectors) for the item codes.

Universal Product Codes (UPCs) are largely consistent for a same item within the manufacturer provided barcode. In other words, a same can of Coke^{®} will have a same barcode in any retailer store within a certain geographic region. Each retailer includes the barcode in its product catalogue. As system 100 is connected to retailer systems, real-time actual transaction prices charged for an item can be captured and the corresponding retailers' product catalogues will include published item prices for each of its items/products.

Although retailers do not permit specific transaction data to be shared, most retailers permit providing aggregated transaction data that is essentially devoid of any retailer identifying information. This arrangement ensures that private or competitive information associated with the retailer is preserved.

System 100 leverages the consistency of UPCs between same items across different retailers within a same region and collection of actual item prices charged during online transaction and during transactions at brick and mortar stores, which span multiple different and disparate retailers.

This item identification and actual transaction pricing information are further combined with the functionality of the item space mapper and similarity manager 160 to permit common baskets of items associated with transactions in a custom region to be derived and used with pricing benchmarks and pricing trends. Item space mapper and similarity manager 160 provides item vectors for each item that is mapped in the multidimensional space. Clusters of the items are derived based on distances between item code vector pairs mapped within the space. Similar item clusters are filtered based on item types associated with the items of the item clusters. Clusters of baskets are directed from the filtered item clusters, each basket cluster comprising a predefined number of item clusters. Each basket cluster is scored based on transaction frequencies of item codes assigned to the corresponding basket cluster. A predefined number of basket clusters are selected based on the basket scores.

The techniques used in deriving the baskets for the pricing analysis was described in U.S. Application No. 17/030,577 (entitled "Prepackaged Basket Generator and Interface"), the disclosure of which is incorporated by reference herein in its entirety.

Custom price strategy service 180 provides a user-facing interface that is available from user devices 140 and management applications 150. The user-facing interface may be application (app) based or browser-based. Additionally, the user-facing interface may be integrated into management applications 150 as additional feature function for pricing analysis and reporting. Custom price strategy service 180 provides interface rendered objects, such interactive graphs that depict pricing trends of a retailer relative to other retailers within a given region. The interactive graph objects can be interacted with by the user within the user-facing interface to obtain more fine-grain details with respect to a particular pricing of an item within a basket or other specific details. Thus, the user can interact with the pricing information provided in the user-facing interface to more completely view and understand the pricing data.

Custom price strategy service 180 provides two techniques by which pricing analysis information can be provided to the users (retailers), a push technique by which the analysis information is automatically pushed to the user and a pull technique by which the analysis information can be acquired on-demand and as requested by the users.

During the pull technique, custom price strategy service 180 receives user-provided criteria for price analysis information through the user-facing interface. Here, input fields or option selections by the user (retailer) permit the user to input item identifiers (codes or item names) or "typical baskets" comprising multiple items associated with a single transaction and which are purchased together. Responsive to the input data, custom price strategy service 180 returns graphs/reports (interactive graph objects to the user-facing interface for interaction by the user). These graphs/reports depict and include the retailer or retailer's store average price versus the price trend in the store's region based on data aggregated of multiple stores (of different retailers) in the region. The user-facing interface also allows the retailer (user) to define pricing goals in relation to the presented trend. Such a goal can be, for example, to be 10% lower than the trend. Based on the defined goals, custom price strategy service 180 will propose to adapt the pricing policy regarding the items within the basket by, for example: increasing/decreasing certain items prices; creating effective promotions or removing ineffective promotions. Additionally, custom price strategy service 180 provides a simulation tool within the user-facing interface, which assists the retailer in adjusting their pricing policy. The effect of each proposed changed will be simulated on the graph (user-facing interactive object) to illustrate where the retailer will be positioned after the change versus the trend.

In the push technique, custom price strategy service 180 autonomously identifies commonly purchased items or "typical baskets," which are mispriced vs the retailer's desired position in a given pricing benchmark. Based on the defined goals, custom price strategy service 180 proposes adapting the pricing of the items that need adjustments as done in the pull technique (discussed above). The autonomous identification of mispriced items is achieved based on periodical comparison of the prices of frequently purchased items versus the benchmark. Cases where offset is detected will be returned by custom price strategy service 180 and presented to the customer in push via the user-facing interface.

The frequency of price comparisons, the definition of frequently purchased items, and the offsets that trigger a notification are configured by the retailer (user) through the user-facing interface.

So, given previous queries of "typical baskets" inserted manually by catalog managers (users) using the pull technique, system 100A (via 160-180) identifies "similar items" within that basket and automatically produces multiple "similar baskets" and compares them to the benchmark. Cases where offset is detected will be returned by custom price strategy service 180 and presented to the customer in the push technique.

In addition, a machine-learning model is provided as machine-learning algorithms (MLAs) 170, which are trained to assist in similar item detection and automatic basket generation. Actual results provided by users with respect to the basket generation and similar item detection can be fed back into the MLAs 170 for purposes of retaining the MLAs.

Once the product catalogue and transaction histories are processed to create the item code vectors for the items, item space mapper and similarity manager 160 can be provided a given item code (as input), the given item code representing an item in a given transaction. A configured number of N similar item codes can be identified based on distances between the given item's mapped context within the multidimensional space and other mapped items' contexts plotted within the multidimensional space. The output produced by the Word2Vec algorithm is similar item codes (similar items) along with similarity scores (which correspond to the distances within the multidimensional space between the position of the provided item code and the positions of similar item codes). Item space mapper and similarity manager 160 can determine the similar item codes to custom price strategy service 180 based on a preset threshold value or range of values and/or based on a predefined number of top similarity scores.

Item space mapper and similarity manager 160 provides the similar item codes along with the similarity scores to custom price strategy service 180. Custom price strategy service 180 obtains a catalogue price for the item code associated with a given transaction and the catalogue prices of each of the similar item codes. A median price is calculated for the similar item codes. The actual item price for the item of the transaction (including any transaction item coupon/discount or item price override for the transaction) is then compared to the median price for the prices of the similar item codes and a price deviation is derived. The price deviation can be above or below the median price. The price deviation is then compared to a threshold amount and when the price deviation exceeds or falls below the threshold amount, custom price strategy service 180 sends a real-time alert to the user-facing interface as an abnormal price.

As system 100 is deployed, feedback is monitored for the actual transactions that were provided price alerts for item prices that fell outside a retailer-defined threshold amount. The feedback is an indication as to an action taken based on the alert, such as ignored (the anomalous item price was allowed for the transaction) or price was adjusted for the transaction. A change in item price for a transaction is considered to be positive feedback whereas no change in the item price following a price alert is considered to be negative feedback.

One or more MLAs 170 are trained on input comprising item code vectors plotted within multidimensional space, a current transaction price associated with the item, a current catalogue price for the item, any transaction discount or transaction override item price for the item, and item prices for items similar to the item (based on a highest similarity score for the similar items returned by the item space mapper and similarity manager 170). The trained MLAs 170 represented a machine-learning model used for item price alerts based on item affinities and prices of items. Thus, as used herein MLA 170 may also be referred to as a machine-learning model.

The trained result to which the MLAs 170 configure to achieve based on the provided input parameters is a determination as to whether a real-time price alert (abnormal price - push technique) for a given item of a current transaction is to be provided or not provided. During training, anomalous prices and acceptable prices are identified as the results expected to be provided by the MLAs 170.

Once the MLAs 170 are trained a machine-learning model for abnormal price alerts is ready for use during transaction processing by custom price strategy service 180 for push techniques. The custom price strategy service 180 receives in real-time an item price for a transaction along with any item discount in price or other item price override. Item space mapper and similarity manager 160 returns similar item codes and corresponding similarity scores between the similar item codes and the item code associated with the transaction. Custom price strategy service 180 obtains catalogue prices for the item of the transaction and for each of the similar items. Custom price strategy service 180 provides the item's catalogue price, actual transaction item price, any transaction item price discount or override, and catalogue prices for the similar items to MLA 170, and MLA 170 returns a decision as to whether a price alert should be raised or not to custom price strategy service 180 for the push technique.

The approach discussed in U.S. Application No. 17/030,577 (entitled "Prepackaged Basket Generator and Interface") is processed by 160-180 for identifying typical baskets during the pull technique. Price data for the items identified baskets are obtained for actual transaction data from transaction histories and from published prices of the items from the corresponding retailer's item/product catalogues.

Custom price strategy service 180 maintains/obtains a specific requesting retailer's item and basket pricing published by that retailer and actual pricing charged in transactions for that retailer and further maintains/obtains pricing (items and baskets) for other retailer's in a defined region of the requesting retailer. This allows custom price strategy service 180 to generating the price benchmarks and trends for the pull technique when the requesting retailer requests the benchmarks and trends through the pull technique.

The UPCs of items may be used by custom price strategy service 180 to augment or check the similar items or similar baskets within a defined region when gathering the pricing data (actual from transactions (including any discounts) and published from item catalogues).

FIG. 1B is a diagram representing a process flow 100B of the system of FIG. 1A, according to an example embodiment.

FIG 1B illustrates a more fine-grain view of some components associated with system 100A.

Each retailer has its own server/cloud platform/environment 111, which includes that retailer's enterprise data store 110, item catalogues 112, loyalty data stores 113, online transaction systems 120, transaction terminals 130, user devices 140, and management applications 150. Each retailer platform 111 is connected to a retailer-service platform 161 via an instance of a transaction data manager 181. Each retailer service platform 161 comprises item space mapper and similarity manager 160, MLAs 170, custom price strategy service 180, and connected instances of each retailer's transaction data manager 181.

User-facing interfaces 190 are operated by the retailers from any retailer-operated device for interaction with custom price strategy service 180. The requesting user/operator provides input data for pull techniques causing custom price strategy service 180 to perform the processing discussed above to provide benchmarks and trends on a per-item or per-basket bases. Additionally, custom price strategy service 180 provides the push technique for items and baskets to dynamically alert the retailer on abnormal pricing.

User-facing interfaces 190 may also be used for the requesting retailer to custom define specific regions for analysis during the push or pull technique. For example, pricing analysis for a given city, state, collection of cities, collection of states, *etc.* So, the geographic region associated with the pricing data obtained and analyzed by custom price strategy service 180 can be user defined.

A requesting retailer provides a strategy or a goal through the user-facing interface 190 as a percentage of an average/trend price within the industry, such as 10% less expensive than the average or trend, 0% less expensive than the average (strategy is to provide the average price for items/baskets), 10% more expensive than the average or trend (here the retailer believes it is offering a higher-value service to customers and has higher quality brand name), *etc.* So, the goal or strategy is quantified as a percentage value of the trend or average within a given region.

During evaluation, custom price strategy service 180 evaluates the abnormal prices (push technique) and the benchmarks and trends for a given item or a given basket of items in view of the stated quantified percentage value provided by the requesting retailer through the user-facing interface.

In an embodiment, components 110-113 and 160-190 are provided as a single cloud-based service to components 120, 140, and 150 via an API.

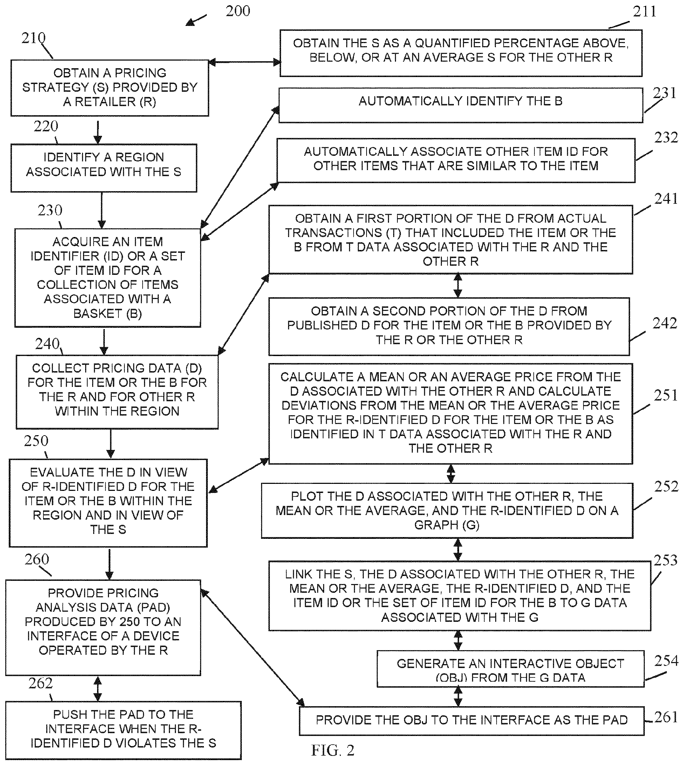

These and other embodiments are now discussed with reference to the FIGS. 2-3.

FIG. 2 is a diagram of a method 200 for a platform-based pricing strategy service, according to an example embodiment. The software module(s) that implements the method 200 is referred to as a "pricing strategy service." The pricing strategy service is implemented as executable instructions programmed and residing within memory and/or a non-transitory computer-readable (processor-readable) storage medium and executed by one or more processors of a device. The processor(s) of the device that executes the pricing strategy service are specifically configured and programmed to process the pricing strategy service. The pricing strategy service has access to one or more network connections during its processing. The network connections can be wired, wireless, or a combination of wired and wireless.

In an embodiment, the device that executes the pricing strategy service is a server. In an embodiment, the server is a cloud processing environment that comprises multiple servers cooperating with one another as a single server. In an embodiment, the server is a Local Area Network (LAN) server.

In an embodiment, the pricing strategy service is all of or some combination of 160-190.

In an embodiment, the pricing strategy service performs the processing discussed above with system 100A and process flow 100B.

In an embodiment, the pricing strategy service is provided as a SaaS to a plurality of enterprises, each enterprise having a subscription relevant to its customers and enterprise data store 110.

At 210, the pricing strategy service obtains a pricing strategy provided by a retailer.

In an embodiment, at 211, the pricing strategy service obtains the pricing strategy as a quantified percentage above, below, or at an average pricing strategy associated with other retailers besides the retailer that provided the pricing strategy at 210.

At 220, the pricing strategy service identifies a region associated with the pricing strategy.

At 230, the pricing strategy service acquires an item identifier for an item or a set of item identifiers for a collection of items associated with a basket of items.

In an embodiment, at 231, the pricing strategy service automatically identifies the basket of items.

In an embodiment, at 232, the pricing strategy service automatically associated other items identifiers for other items that are similar to the item.

In an embodiment, the item identifier is obtained as a UPC for items as used within the region.

At 240, the pricing strategy service collects, assembles, or aggregates pricing data for the item or the basket for the retailer and for the other retailers within the region.

In an embodiment, at 241, the pricing strategy service obtains a first portion of the pricing data from actual transactions that included the item or the basket from transaction data associated with the retailer and the other retailers.

In an embodiment of 241 and at 242, the pricing strategy service obtains a second portion of the pricing data from published pricing data for the item or the basket provided by the retailer or the other retailers.

At 250, the pricing strategy service evaluates the pricing data in view of retailer-identified pricing data for the item or the basket within the region in view of the pricing strategy.

In an embodiment, at 251, the pricing strategy service calculates a mean or an average price from the pricing data associated with the other retailers. The pricing strategy service also calculates deviations from the mean or the average price for the retailer-identified pricing data for the item or the basket as identified in transaction data associated with the retailer and the other retailers.

In an embodiment of 251 and at 252, the pricing strategy service plots the pricing data associated with the other retailers, the mean or the average, and the retailer-identified pricing data on a graph.

In an embodiment of 252 and at 253, the pricing strategy service links the pricing strategy, the pricing data associated with the other retailers, the mean or the average, the retailer-identified pricing data, and the item identifier or the set of item identifiers associated with the basket to graph data.

In an embodiment of 253 and at 254, the pricing strategy service generates an interactive graphical object from the graph data.

At 260, the pricing strategy service provides pricing analysis data produced by 250 to an interface of a device operated by the retailer.

In an embodiment of 254 and 260, at 261, the pricing strategy service provides the interactive graphical object to the interface as the pricing analysis data.

In an embodiment, at 262, the pricing strategy service pushes the pricing analysis data to the interface when the retailer-identified pricing data violates the pricing strategy for any given transaction associated with the retailer.

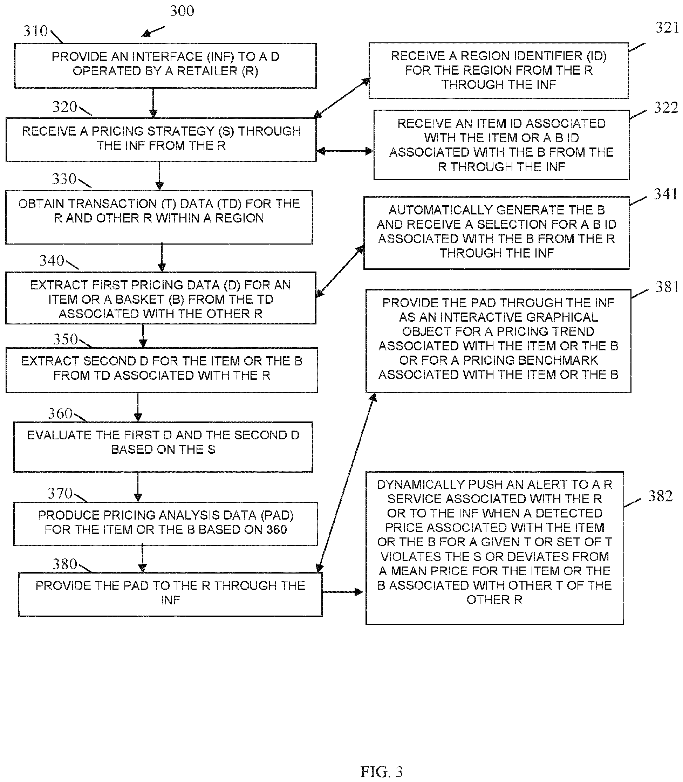

FIG. 3 is a diagram of another method 300 for a platform-based pricing strategy service, according to an example embodiment. The software module(s) that implements the method 300 is referred to as a "pricing analysis manager." The pricing analysis manager is implemented as executable instructions programmed and residing within memory and/or a non-transitory computer-readable (processor-readable) storage medium and executed by one or more processors of a device. The processors that execute the item pricing analysis manager are specifically configured and programmed to process the pricing analysis manager. The pricing analysis manager has access to one or more network connections during its processing. The network connections can be wired, wireless, or a combination of wired and wireless.

In an embodiment, the device that executes the pricing analysis manager is a server. In an embodiment, the server is a cloud processing environment that comprises multiple servers cooperating with one another as a single server. In an embodiment, the server is a LAN server that is local to a retail store.

In an embodiment, the item pricing analysis manager is all or some combination of 160-190, process flow 100B, and/or the method 200.

The item pricing analysis manager presents another and, in some ways, enhanced processing perspective to that which was described above with the FIG. 2.

At 310, the pricing analysis manager provides an interface to a device operated by a retailer. In an embodiment, the interface is provided as a set of web-accessible web pages, a mobile application, or as an enhancement through an existing retailer application or service.

At 320, the pricing analysis manager receives a pricing strategy through the interface from the retailer.

In an embodiment, at 321, the pricing analysis manager receives a region identifier for the region from the retailer through the interface.

In an embodiment, at 322, the pricing analysis manager receives an item identifier associated with an item or a basket identifier associated with a collection of items for a basket from the retailer through the interface.

At 330, the pricing analysis manager obtains transaction data for the retailer and other retailers within a region.

At 340, the pricing analysis manager extracts first pricing data for an item or a basket of items from the transaction data associated with the other retailers.

In an embodiment, at 341, the pricing analysis manager automatically generates the basket of items and receives a selection for a basket identifier associated with the basket from the retailer through the interface.

At 350, the pricing analysis manager extracts second pricing data for the item or the basket of items from the transaction data associated with the retailer.

At 360, the pricing analysis manager evaluates the first pricing data and the second pricing data based on the pricing strategy.

At 370, the pricing analysis manager produces pricing analysis data for the item, or the basket based on 360.

At 380, the pricing analysis manager provides the pricing analysis data to the retailer through the interface.

In an embodiment, at 381, the pricing analysis manager provides the pricing analysis data through the interface as an interactive graphical object for a pricing trend associated with the item or the basket of items or for a pricing benchmark associated with the item or the basket of items.

In an embodiment, at 382, the pricing analysis manager dynamically pushes an alert to a retailer service associated with the retailer to to the interface when a detected price associated with the item or the basket of items for a given transaction or a given set of transactions violates the pricing strategy or deviates from a mean price for the item or the basket of items associated with other transactions of the other retailers.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

## Claims

1. A method, comprising:
obtaining a pricing strategy provided by a retailer;
identifying a region associated with the pricing strategy;
acquiring an item identifier for an item or a set of item identifiers for a collection of items associated with a basket of items;
collecting pricing data for the item or the basket of items for the retailer and for other retailers within the region;
evaluating the pricing data in view of retailer-identified pricing data for the item or the basket of items within the region and in view of the pricing strategy; and
providing pricing analysis data produced by the evaluating to an interface of a device operated by the retailer.

2. The method of claim 1, wherein obtaining further includes obtaining the price strategy as a quantified percentage above, below, or at an average pricing strategy calculated for the other retailers.

3. The method of claim 1, wherein acquiring further includes automatically identifying the basket.

4. The method of claim 1, wherein acquiring further includes automatically associating other item identifiers for other items that are similar to the item.

5. The method of claim 1, wherein collecting further includes obtaining a first portion of the pricing data from actual transactions that included the item or the basket from transaction data associated with the retailer and the other retailers.

6. The method of claim 5, wherein collecting further includes obtaining a second portion of the pricing data from published pricing data for the item or the basket provided by the retailer and the other retailers.

7. The method of claim 1, wherein evaluating further includes calculating a mean or an average price from the pricing data associated with the other retailers and calculate deviations from the mean or the average price for the retailer-identified pricing data for the item or the basket as identified in transaction data associated with the retailer and the other retailers.

8. The method of claim 7, wherein calculating further includes plotting the pricing data associated with the other retailers on a graph, plotting the mean or the average price on the graph, plotting the retailer-identified processing data on the graph.

9. The method of claim 8, wherein plotting further includes linking the pricing strategy, the pricing data associated with the other retailers, the mean or the average, the retailer-identified pricing data, and the item identifier for the item or the set of item identifiers for the basket to graph data associated with the graph.

10. The method of claim 9, wherein linking further includes generating a graphical interactive object from the graph data.

11. The method of claim 1, wherein providing further includes providing the graphical interactive object to the interface as the pricing analysis data.

12. The method of claim 11, wherein providing further includes pushing the pricing analysis data to the interface without a request from the retailer when the retailer-identified pricing data violates the pricing strategy.

13. A system, comprising:
at least one processing device having at least one processor configured to execute instructions from a non-transitory computer-readable storage medium;
the instructions when executed by the at least one processor from the non-transitory computer-readable storage medium cause the at least processor to perform operations comprising:
providing an interface to a device operated by a retailer;
obtaining a pricing strategy from the retailer through the interface;
identifying a region and an item identifier for an item or a basket identifier for a collection of items;
obtaining transaction data for the retailer and for other retailers associated with the region;
extracting prices charged for the item or the collection of items associated with the basket from the transaction data;
comparing retailer-identified prices for the retailer against other retailer-identified prices for the other retailers in view of the pricing strategy;
producing pricing comparison data between the retailer-identified prices and the other retailer-identified prices in view of the pricing strategy; and
providing the pricing comparison data as an interactive graphical object for interaction by the retailers through the interface.

14. The system of claim 13, wherein the instructions are provided as a cloud-based price strategy service to the retailer through the interface.
